# EUROPÄISCHE PATENTSCHRIFT

(11) **EP 3 322 657 B1**
(45) Veröffentlichungstag und Bekanntmachung des Hinweises auf die Patenterteilung: **29.09.2021**
(21) Anmeldenummer: 16729844.7
(22) Anmeldetag: 08.06.2016
(51) Int. Cl.: B65G 37/00, B65G 11/08

(54) **TRANSPORTRUTSCHE MIT ANTRIEBSMITTEL**
TRANSPORT CHUTE HAVING DRIVE MEANS
COLONNE DE DESCENTE À MOYEN D'ENTRAÎNEMENT

(30) Priorität: 14.07.2015 DE 102015213195
(43) Veröffentlichungstag der Anmeldung: 23.05.2018
(73) Patentinhaber: Siemens Aktiengesellschaft, 80333 München (DE)
(72) Erfinder: SCHITTHELM, Oliver, 90425 Nürnberg (DE)
(74) Vertreter: Siemens Patent Attorneys
(86) Internationale Anmeldenummer: PCT/EP2016/063052
(87) Internationale Veröffentlichungsnummer: WO 2017/008957

(56) Entgegenhaltungen:
- EP-A1- 2 865 620
- WO-A1-00/06475
- GB-A- 191 220 385

## Beschreibung

Die Erfindung bezieht sich auf das technische Gebiet der Transportrutschen für Güter, insbesondere Pakete und Gepäckstücke.

Bei automatisierten Sortierprozessen, wie zum Beispiel in Paketsortieranlagen oder Gepäckförder- und Sortiersystemen von Flughäfen, legen die Güter oft mehrere hundert Meter zurück und erreichen dabei beträchtliche Geschwindigkeiten von mehreren Metern pro Sekunde. Eine Ausschleusung aus dem Sortierprozess erfolgt oft über Transportrutschen. Transportrutschen sind demzufolge häufig Endstellen eines Sortierprozesses und dienen zugleich als Speicher, so dass die Entnahme nicht augenblicklich im Moment der Ausschleusung erfolgen muss. Die Transportrutsche überwindet einen Höhenunterschied zwischen Sorter (Sortieranlage) und Rutschendstelle, an der die Güter entnommen werden, so dass die Gewichtskraft der Güter zu ihrer Beförderung verwendet werden kann.

Insbesondere in Paketsortieranlagen kommen Transportrutschen als Sorter-Endstellen zum Einsatz. Die Zunahme von Online-Bestellungen von Waren hat zu einem beständigen Anstieg des Paket- und Päckchenvolumens geführt, wodurch vorteilhafte Ausgestaltungen von Transportrutschen vor allem in Paketsortierzentren großes Potential haben. Zur Vermeidung einer Beschädigung der Güter werden diese auf vielen Transportrutschen abgebremst. Dazu ist oft ein Antriebsmittel, häufig in Form einer Rollenbahn, in die Rutschfläche integriert, welches die Güter durch einen langsamen Antrieb in Fallrichtung abbremst und somit kontrolliert in Richtung der Rutschendstelle befördert. Dadurch werden Schäden an den Gütern vermindert. Das Antriebsmittel kann die Güter aktiv oder über Schwerkraftförderung, im Fall einer Rollenbahn beispielsweise über Bremsrollen, die die Ablaufgeschwindigkeit konstant halten, befördern. Wenn eine Verwendung der Transportrutschen als Speicher erforderlich ist, werden zur Erhöhung der Speicherkapazität oft Unterbrüche, beispielsweise in Form von Stufen, in die Rutschfläche eingebaut, damit sich mehrere Schichten von Gütern parallel zur Rutschfläche bevorzugt unterhalb des Unterbruchs ausbilden können. Durch den Transport - aktiv und/ oder passiv - der Güter auf der Rutschfläche in Richtung Rutschendstelle bildet sich eine unterste Schicht, die unmittelbar auf der glatten Rutschfläche aufliegt, dicht gepackt ohne allzu viele Leerstellen aus.

Da die unterste Schicht jedoch nicht ansatzweise so glatt und eben wie die Rutschfläche selber ist, verkeilen sich weitere Güter, die die Transportrutsche nach Ausbildung der untersten Schicht passieren, relativ leicht unvorteilhaft mit den Gütern der untersten Schicht. Nachdem sich erst einmal eine anfängliche Verkeilung ausgebildet hat, ist ein weiteres Passieren in Richtung Rutschendstelle zusätzlich erschwert. Da- rüber hinaus begünstigt eine stärkere Verkeilung der Güter Schäden an ebendiesen. Da die Güter aufgrund der Verkeilung die Transportrutsche nicht ungehindert in Richtung Rutschendstelle passieren können, bildet sich unterhalb des Unterbruchs eine Anhäufung aus, die eine vollständige Ausnutzung des gesamten Volumens der Transportrutsche zur Speicherung verhindert. Sowohl die Gewichtskraft der Güter, als auch eine Ansteuerung des Antriebsmittels in Richtung Rutschendstelle übt einen Staudruck auf die Güter in der Rutschendstelle aus.

Dieser Staudruck ist problematisch, da Schäden an Gütern durch Komprimieren der Güter infolge des übermäßigen Drucks auftreten können. Darüber hinaus ist dadurch auch eine Entladung, insbesondere der untersten Schicht direkt an der Rutschendstelle, schwierig.

Das Dokument WO 2000/06475 A1 offenbart ein System und ein Verfahren zum Vereinzeln von Paketen. Die Pakete werden dabei zwischen aufeinanderfolgenden, senkrechten Fördererabschnitten durch Schächte geführt. Eine erste Rutsche führt Pakete von einem Eingangsförderabschnitt zu einem Zwischenförderabschnitt, so dass Pakete mit unterschiedlichen Querpositionen in der Transportrichtung längs angeordnet werden, wenn sie von dem Eingangsförderabschnitt zu dem Zwischenförderabschnitt gelangen. Eine zweite Rutsche führt Pakete von einer Zwischenförderstrecke zu einer Aufnahmeförderstrecke, so dass die Pakete nachfolgend einen deutlich verringerten gegenseitigen Abstand in Richtung quer zur Transportrichtung der Aufnahmeförderstrecke aufweisen. Das Dokument EP 2 865 620 A1 offenbart eine Transportrutsche nach dem Oberbegriff des Anspruchs 1 und ein Verfahren zum Speichern und/ oder zur erleichterten Entladung von übereinander legbaren Gütern auf einer Transportrutsche, welche einen Rutschabschnitt mit einer geneigten Rutschfläche, mit einer Fallrichtung entlang der Rutschfläche, umfasst und einer Rutschendstelle unterhalb des Rutschabschnitts, wobei besagter Rutschabschnitt mittels mindestens eines Unterbruchs unterbrochen ist, so dass die Rutschfläche in mindestens eine obere Rutschfläche und eine untere Rutschfläche unterteilt ist und wobei zumindest die untere Rutschfläche weiter mindestens ein antreibbares und ansteuerbares Antriebsmittel, auf welchem die Güter einer untersten Schicht zumindest teilweise aufliegen können, umfasst, umfassend die folgenden Verfahrensschritte:
- passieren lassen der Güter entlang der Rutschfläche in Fallrichtung;
- ausbilden eines Güterstapels von mindestens zwei übereinander liegenden Schichten von Gütern;
- befördern des Güterstapels in Fallrichtung.

Der vorliegenden Erfindung liegt daher die Aufgabe zugrunde,
eine noch vorteilhaftere Befüllung der Transportrutsche und
ein entsprechendes Verfahren zum Speichern und/oder zur erleichterten Entladung von übereinander legbaren Gütern auf einer Transportrutsche zu ermöglichen.

Diese Aufgabe wird durch die im Patentanspruch 1 angegebene Transportrutsche gelöst.

Hinsichtlich eines Verfahrens wird die vorstehend genannte Aufgabe erfindungsgemäß gelöst durch ein Verfahren zum Speichern und/oder zur erleichterten Entladung von übereinander legbaren Gütern auf einer Transportrutsche. Die Transportrutsche umfasst einen Rutschabschnitt. Der Rutschabschnitt weist eine geneigte Rutschfläche auf, mit einer Fallrichtung entlang der Rutschfläche. Die Transportrutsche umfasst zudem eine Rutschendstelle unterhalb des Rutschabschnitts. Der besagte Rutschabschnitt ist mittels mindestens eines Unterbruchs unterbrochen. Dadurch ist die Rutschfläche in mindestens eine obere Rutschfläche und eine untere Rutschfläche unterteilt. Zumindest die untere Rutschfläche umfasst weiter mindestens ein entgegen der Fallrichtung antreibbares und ansteuerbares Antriebsmittel zum Transportieren der Güter. Die Güter der untersten Schicht können für ihren Transport zumindest teilweise auf dem Antriebsmittel aufliegen. Der zunächst erfolgende Verfahrensschritt ist ein passieren lassen der Güter entlang der Rutschfläche in Fallrichtung. Der anschließend erfolgende Verfahrensschritt ist ein Befördern der Güter durch das entgegen der Fallrichtung betriebene Antriebsmittel.

Vorteilhafte Ausgestaltungen der Erfindung sind in weiteren Ansprüchen angegeben.

Bevorzugte Ausführungsformen der Erfindung werden nachfolgend anhand der Figuren beispielsweise näher erläutert. Dabei zeigen:
- Figur 1: schematisch eine seitliche Ansicht einer Ausgestaltung einer Transportrutsche;
- Figur 2: die in Figur 1 dargestellte Transportrutsche, die ohne Ansteuerung eines Antriebsmittels entgegen der Fallrichtung befüllt wurde;
- Figur 3: eine Ausbildung von Schichtstapeln von Gütern auf der in Figur 1 dargestellten Transportrutsche, die mit Ansteuerung des Antriebsmittels entgegen der Fallrichtung befüllt wurde;
- Figur 4: die zunächst wie in Figur 3 gezeigt befüllte und anschließend in Fallrichtung betriebene Transport- rutsche von Figur 1;
- Figur 5: die zunächst wie in Figur 3 und 4 gezeigt befüllte Transportrutsche von Figur 1 nach weiterer Befüllung; und
- Figur 6: die wie in Figur 5 befüllte Transportrutsche von Figur 1, wobei das Antriebsmittel im Anschluss an die in Figur 5 dargestellte Situation in Fallrichtung betrieben wurde.

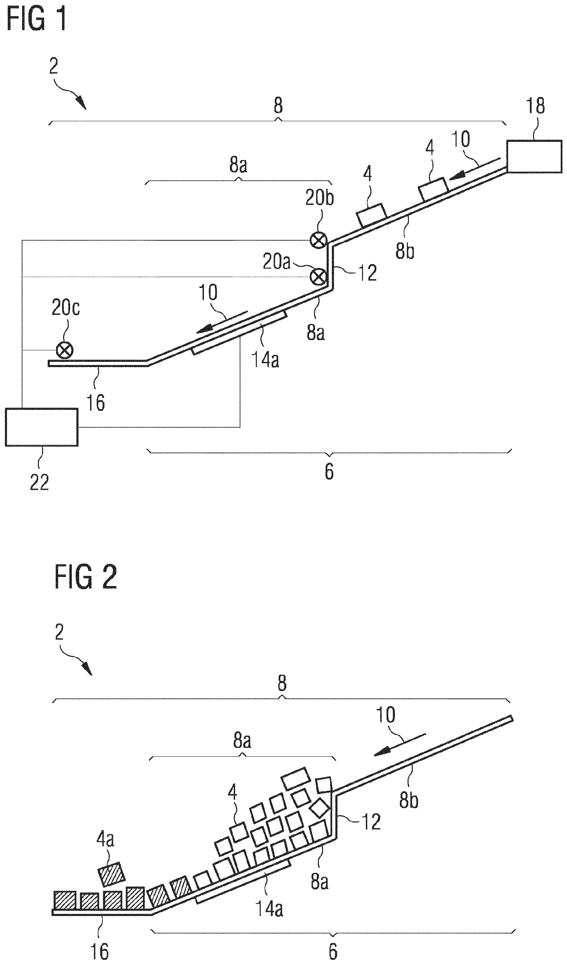

Figur 1 zeigt gemäß einer bevorzugten Ausführungsform der Erfindung schematisch eine seitliche Ansicht einer Transportrutsche 2, geeignet zur Verwendung als Speicher von übereinander legbaren Gütern 4, insbesondere von Paketen und Gepäckstücken. Die Transportrutsche 2 umfasst einen Rutschabschnitt 6. Der Rutschabschnitt 6 weist eine geneigte Rutschfläche 8 auf, mit einer Fallrichtung 10 entlang der Rutschfläche 8. Die Fallrichtung 10 einer Transportrutsche 2 bei einer geneigten Rutschfläche 8 ist durch die Schwerkraft bestimmt und folgt der Richtung des größten Gefälles. Bei einer ebenen Rutschfläche 8 mit einem Neigungswinkel von 0 Grad entspricht die Fallrichtung 10 einer gesamthaft ausgeführten Transportrichtung der Güter 4. Der besagte Rutschabschnitt 6 ist mittels mindestens eines Unterbruchs 12, beispielsweise einer Stufe, unterbrochen. Dadurch ist die Rutschfläche 8 in mindestens eine obere Rutschfläche 8b und eine untere Rutschfläche 8a unterteilt. Der Unterbruch 12 ist ausgestaltet, unterhalb des Unterbruchs 12 eine Ausbildung von mindestens zwei übereinander liegenden Schichten der Güter 4 zu erleichtern. Die untere Rutschfläche 8a umfasst weiter mindestens ein ansteuerbares Antriebsmittel 14a zum Transportieren der Güter 4. Die Güter 4 der untersten Schicht können für ihren Transport zumindest teilweise auf dem Antriebsmittel 14a aufliegen. Somit erstreckt sich das Antriebsmittel 14a entweder nur über einen Teil der unteren Rutschfläche 8a oder aber über die gesamte untere Rutschfläche 8a. Ein Antreiben des Antriebsmittels 14a entgegen der Fallrichtung 10 während einer Befüllung ermöglicht einen dichteren Aufbau der untersten Schicht bereits im oberen Bereich der unteren Rutschfläche 8a, bevor die unterste Schicht über die gesamte Rutschfläche 8 unterhalb des Unterbruchs 12 ausgebildet ist und nicht erst im unteren Bereich der unteren Rutschfläche 8a. Daher kann bereits zu diesem Zeitpunkt eine Ausbildung von weiteren Schichten von Gütern 4, die auf der untersten Schicht aufliegen, im oberen Bereich der unteren Rutschfläche 8a erfolgen. Dies ermöglicht insgesamt eine vorteilhafte Befüllung der Transportrutsche 2 und somit eine Erhöhung ihrer Speicherkapazität.

Die Transportrutsche 2 umfasst zudem eine Rutschendstelle 16 unterhalb des Rutschabschnitts 6, an der die Güter 4 entnehmbar sind. Die Rutschfläche 8 kann in die Rutschendstelle 16 münden, oder diese umfassen. Um ein ungewolltes Herunterfallen der Güter 4 zu verhindern, kann die Rutschendstelle 16 einen Rutschendstellenblockierer umfassen. Die Befüllung mit Gütern 4 erfolgt von einem Sorter 8, der oberhalb der Transportrutsche 2 angeordnet ist. Die auf der oberen Rutschfläche 8b gezeigten Güter 4 passieren somit die gesamte Rutschfläche 8 hin zur Rutschendstelle 16 ausgehend vom Sorter 18.

Bei einer befüllten Transportrutsche 2 verursacht die Gewichtskraft der Güter 4, die sich oberhalb der Rutschendstelle 16 befinden, einen vor allem auf die Güter 4 in der Rutschendstelle 16 in Fallrichtung 10 wirkenden Staudruck. Dieser Staudruck kann die Güter 4 komprimieren und somit beschädigen und erschwert darüber hinaus eine Entladung der Transportrutsche 2. Ein Antreiben des Antriebsmittels 14a entgegen der Fallrichtung 10 nach Abschluss der Befüllung verringert den Staudruck und erleichtert somit eine Entnahme.

Damit das mindestens eine Antriebsmittel 14a je nach Einsatzgebiet und/ oder Ausmaß unterschiedlich ausgestaltet werden kann, umfasst das Antriebsmittel 14a eine Rollenbahn und/ oder ein Förderband. Das Antriebsmittel 14a kann entgegen der oder in Fallrichtung 10 betrieben werden oder still stehen.

Um eine berührungslose Detektion der Güter 4 auf der Transportrutsche 2 zu ermöglichen, umfasst die Transportrutsche 2 mindestens einen Detektor 20 zur berührungslosen Detektion der Güter 4. Ergebnisse der Detektion können zu einer vorteilhaften Ansteuerung des Antriebsmittels 14a herangezogen werden. Der mindestens eine Detektor 20 umfasst einen Endstellendetektor 20c und/ oder einen Gegendruckdetektor 20a und/ oder einen Schichtausbildungsdetektor 20b. Der Endstellendetektor 20c ist ausgestaltet, Güter 4 in der Rutschendstelle 16 zu detektieren. Vorausgesetzt, dass das Antriebsmittel 14a bei einer steten Ansteuerung entgegen der Fallrichtung 10 keine Güter 4 in Richtung Rutschendstelle 16 passieren lässt, ist eine Anwesenheit von Gütern 4 am Endstellendetektor 20c gleichbedeutend mit einer kompletten Ausbildung der untersten Schicht. Somit kann mit dem Endstellendetektor 20c, der vorteilhaft unmittelbar oberhalb der Rutschfläche 8 positioniert wird, die komplette Ausbildung der untersten Schicht detektiert werden. Der Gegendruckdetektor 20a ist ausgestaltet, unmittelbar unterhalb des Unterbruchs 12 auf der unteren Rutschfläche 8a aufliegende Güter 4 zu detektieren. Der Gegendruckdetektor 20a kann bei einem Antreiben des Antriebsmittels 14a entgegen der Fallrichtung 10 einen auf die sich stationär unmittelbar unterhalb des Unterbruchs 12 befindenden Güter 4 ausgeübten Gegendruck anzeigen. Der Gegendruck kann die Güter 4 komprimieren und somit beschädigen. Stationär bedeutet, dass die Güter 4 direkt am Unterbruch 12 verharren und diesen nicht einfach nur passieren. Dem Gegendruck wird entgegen gewirkt, wenn ein weiteres Antreiben des Antriebsmittels 14a gestoppt wird, sobald sich Güter 4 stationär am Gegendruckdetektor 20a befinden. Der Schichtausbildungsdetektor 20b ist ausgestaltet, in unmittelbarer Nähe des Unterbruchs 12 eine Höhe der ausgebildeten Schichten zu detektieren. Der Schichtausbildungsdetektors 20b zeigt auf seiner angeordneten Höhe an, ob sich bereits parallel zur unteren Rutschfläche 8a Schichtstapel von Gütern 4 ausgebildet haben. Da sich Schichtstapel bevorzugt unterhalb des Unterbruchs 12 ausbilden und die Höhe der auf der unteren Rutschfläche 8a ausgebildeten Schichtstapel hierbei konstruktionsbedingt im Wesentlichen die Höhe der oberen Rutschfläche 8b erreichen, ist eine Positionierung des Schichtausbildungsdetektors 20b in unmittelbarer Nähe des Unterbruchs 12 im Wesentlichen auf Höhe der oberen Rutschfläche 8b sinnvoll.

Um eine gängige und somit problemlos implementierbare technische Lösung zur berührungslosen Detektion von Gütern 4 zu ermöglichen, umfasst der mindestens eine eingesetzte Detektor 20 und/ oder der Endstellendetektor 20c und/ oder der Gegendruckdetektor 20a und/ oder der Schichtausbildungsdetektor 20b jeweils mindestens eine Lichtschranke.

Um das Antriebsmittel 14a direkt anzusteuern, umfasst die Transportrutsche 2 zudem eine Steuervorrichtung 22, durch welche das Antriebsmittel 14a ansteuerbar ist. Die Steuervorrichtung 22 ist mit den Detektoren 20, 20a, 20b, 20c und dem Antriebsmittel 14a verbunden. Eine Ansteuerung des Antriebsmittels 14a in oder entgegen der Fallrichtung 10 oder ein Stillstehen kann nach unterschiedlichen Kriterien erfolgen. Die Kriterien können beispielsweise Zeit, Anzahl oder Gewicht der die Rutsche passierenden Güter 4 und/ oder eine Abhängigkeit einer Detektion der An- bzw. Abwesenheit der Güter 4 an geeigneten Stellen der Transportrutsche 2 umfassen. Die Steuervorrichtung 22 ist adaptiert zu unterscheiden, ob sich ein Gut 4 stationär am Detektor 20 befindet oder diesen Detektor 20 nur gerade passiert. Dadurch kann eine Ansteuerung des Antriebsmittels 14a in Abhängigkeit davon erfolgen, ob sich Güter 4 tatsächlich stationär am Detektor 20 befinden. Andernfalls würde auch ein einfaches Passieren des detektierten Guts 4 eine Ansteuerung bewirken, die einen Transport der Güter 4 in eine eigentlich unerwünschte Transportrichtung zur Folge hat. Hierzu umfasst die Steuervorrichtung 22 ein Logikmodul, welches ausgestaltet ist, eine stationäre Anwesenheit der Güter 4 anzuzeigen und/ oder mit welchem Regeln für eine Ansteuerung des Antriebsmittels 14a auslesbar sind.

Figur 2 zeigt die bereits in Figur 1 dargestellte Transportrutsche 2, die ohne Ansteuerung des Antriebsmittels 14a entgegen der Fallrichtung 10 befüllte wurde. Eine derartige Befüllung entspricht dem Stand der Technik. Während der Befüllung kann das Antriebsmittel 14a still stehen und/ oder in Fallrichtung 10 betrieben werden. Güter 4a in Nähe der Rutschendstelle 16 und im unteren Bereich der unteren Rutschfläche 8a bilden kaum Schichtstapel aus, so dass nicht das gesamte zur Verfügung stehende Volumen der Transportrutsche 2 in Nähe der Rutschendstelle 16 und/ oder im unteren Bereich der unteren Rutschfläche 8a zur Speicherung verwendet werden kann. Güter 4, die sich zunächst im oberen Bereich der unteren Rutschfläche 8a befinden bilden hingegen mehrere Schichtstapel parallel zur Rutschfläche 8 aus, da der Unterbruch 12 eine solche Ausbildung erleichtert. Es wird also nur das im oberen Bereich der unteren Rutschfläche 8a zur Verfügung stehende Volumen der Transportrutsche 2 vorteilhaft zur Speicherung ausgenutzt, wobei auch dies erst nach einer kompletten Ausbildung der untersten Schicht über die gesamte Rutschfläche 8 unterhalb des Unterbruchs 12 geschieht.

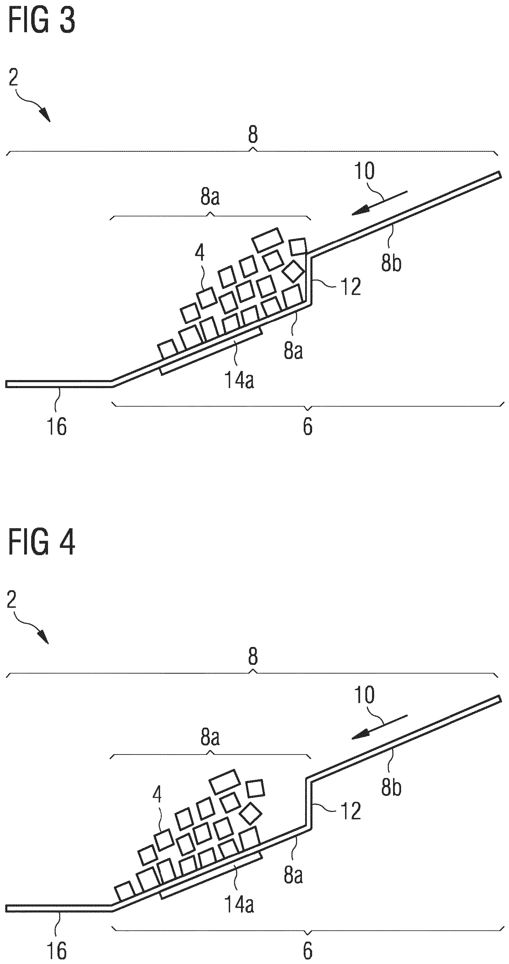

Figur 3 zeigt eine schematische Darstellung ausgebildeter Schichtstapel von Gütern 4 auf der in Figur 1 dargestellten Transportrutsche 2 mit Ansteuerung des Antriebsmittels 14a entgegen der Fallrichtung 10 während der Befüllung der Transportrutsche 2. Um die Transportrutsche mit Hilfe eines Verfahrens zum Speichern und/ oder zur erleichterten Entladung von übereinander legbaren Gütern 4 auf einer Transportrutsche 2 von Beginn an vorteilhaft zu befüllen, ist der zunächst erfolgende Verfahrensschritt ein passieren lassen der Güter 4 entlang der Rutschfläche 8 in Fallrichtung 10. Der anschließend erfolgende Verfahrensschritt ist ein Befördern der Güter 4 durch das entgegen der Fallrichtung 10 betriebene Antriebsmittel 14a. Dadurch werden die den Unterbruch 12 passierenden Güter 4 zunächst nicht bis hin zur Rutschendstelle 16, sondern hin zum Unterbruch 12 transportiert. Die Güter 4 bilden somit schon im oberen Bereich der unteren Rutschfläche 8a direkt unterhalb des Unterbruchs 12 eine dichte unterste Schicht aus, bevor diese über die gesamte Rutschfläche 8 unterhalb des Unterbruchs 12 ausgebildet ist. Dies ermöglicht im weiteren Verlauf eine insgesamt vorteilhafte Befüllung der Transportrutsche. Darüber hinaus reduziert das Antreiben des Antriebsmittels 14a entgegen der Fallrichtung 10 im Anschluss an die vollständige Befüllung der Transportrutsche 2 den Staudruck auf die Güter 4 in der Rutschendstelle 16. Dies ist für eine erleichterte Entladung nutzbar und verringert die Wahrscheinlichkeit von Schäden an den Gütern 4 in der Rutschendstelle 16.

Die Ausbildung mindestens einer weiteren auf der untersten Schicht aufliegenden Schicht im oberen Bereich der unteren Rutschfläche 8a erfolgt durch passieren lassen weiterer Güter 4 über den Unterbruch 12 entlang der Rutschfläche 8 in Fallrichtung 10. Diese Güter 4 bilden im oberen Bereich der unteren Rutschfläche 8a weitere Schichten oberhalb der untersten Schicht aus. Dadurch wird die Speicherkapazität der Transportrutsche 2 im oberen Bereich der unteren Rutschfläche 8a bereits vor einer kompletten Ausbildung der untersten Schicht über die gesamte untere Rutschfläche 8a erhöht. Die Ansteuerung des Antriebsmittels 14a entgegen der Fallrichtung 10 erhöht den in Richtung des Unterbruchs 12 wirkenden Gegendruck auf die Güter 4 im oberen Bereich der unteren Rutschfläche 8a in der Nähe des Unterbruchs 12. Im oberen Bereich der unteren Rutschfläche 8a entspricht die Befüllung mit Gütern 4 in etwa der in Figur 2 dargestellten Befüllung nach dem Stand der Technik. Bei einer wie in Figur 2 befüllten Transportrutsche 2 verringert eine Ansteuerung des Antriebsmittels 14a entgegen der Fallrichtung 10 den auf die Güter 4a in der Rutschendstelle 16 wirkenden Staudruck.

Figur 4 zeigt die Transportrutsche 2 von Figur 1 die zunächst wie in Figur 3 gezeigt befüllt und danach in Fallrichtung 10 betrieben wurde. Somit erfolgt im Anschluss an eine Ansteuerung des Antriebsmittels 14a entgegen der Fallrichtung 10 eine Ansteuerung des Antriebsmittels 14a in Fallrichtung 10. Der Transport der Güter 4 durch das Antriebsmittel 14a in Fallrichtung 10 kann durch einen aktiven Antrieb geschehen, aber auch passiv über Schwerkraftförderung, die auch eine Abbremsung umfassen kann. Zwischen dem Wechsel, der im Anschluss an die in Figur 3 gezeigte Ausführungsform erfolgen kann, kann das Antriebsmittel 14a still stehen. Hierdurch werden mehrere bereits parallel zur Rutschfläche 8 im oberen Teil der unteren Rutschfläche 8a ausgebildete Schichten von Gütern 4 gesamthaft in Richtung Rutschendstelle 16 transportiert. Ohne einen Abtransport würden diese Schichtstapel das Passieren weiterer Güter 4 in Richtung Rutschendstelle 16 erschweren und somit eine vorteilhafte Befüllung der Transportrutsche 2 in Nähe der Rutschendstelle 16 erschweren bzw. nahezu verunmöglichen, da die Güter 4 oberhalb der untersten Schicht meist unvorteilhaft mit der untersten Schicht und miteinander verkeilen. Einzelne, nicht direkt auf der Rutschfläche 8 aufliegende Güter 4 können nicht ungehindert hin zur Rutschendstelle 16 passieren, jedoch kann der Schichtstapel verlässlich gesamthaft mit Hilfe des Antriebsmittels 14a in Fallrichtung 10 transportiert werden. Dadurch entsteht unterhalb des Unterbruchs 12 Platz für eine weitere Befüllung. Die weitere Befüllung kann, muss aber nicht, auch schon während der Ansteuerung des Antriebsmittels 14a in Fallrichtung 10 und somit zeitgleich mit dem Abtransport der Schichtstapel erfolgen.

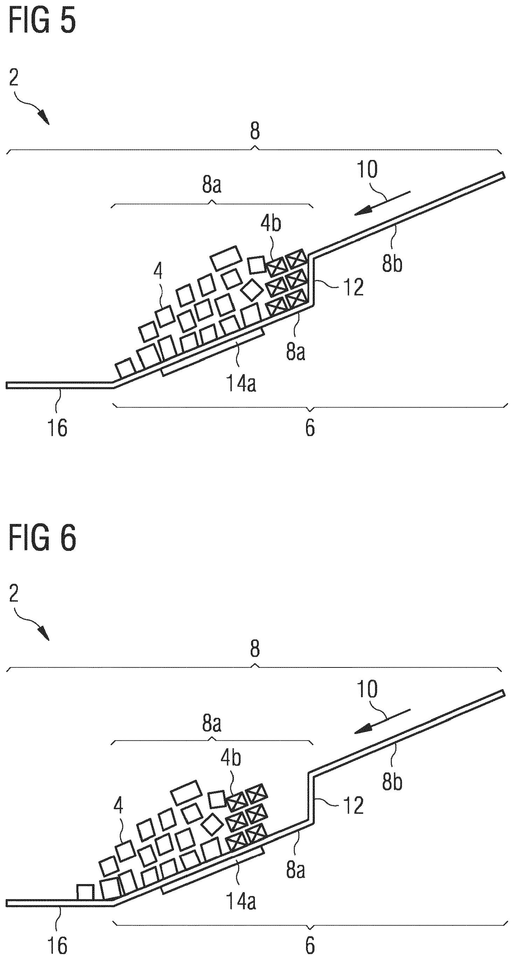

Figur 5 zeigt die Transportrutsche 2 von Figur 1, die zunächst wie in Figur 3 und 4 gezeigt befüllt wurde nach weiterer Befüllung. Der in Figur 4 dargestellte Platz unterhalb des Unterbruchs 12 wurde mit weiteren Gütern 4b, die den Unterbruch 12 nach und/ oder während des Transports der Schichtstapel der Güter 4 in Fallrichtung 10 passiert haben, befüllt. Da die Befüllung im oberen Bereich der unteren Rutschfläche 8a erfolgt, können sich dort dicht gepackte und somit vorteilhaft das Volumen der Transportrutsche 2 ausnutzende Schichtstapel ausbilden. Während der Befüllung kann das Antriebsmittel 14a still stehen und/ oder entgegen der Fallrichtung 10 und/ oder in Fallrichtung 10 angesteuert werden. Dieser Verfahrensschritt und weitere Details einer bevorzugten Ausführungsform des Verfahrens zu einer Befüllung der Transportrutsche 2 werden in den abhängigen und unabhängigen Ansprüchen genauer beschrieben.

Figur 6 zeigt die wie Figur 5 befüllten Transportrutsche 2 von Figur 1, wobei das Antriebsmittel 14a im Anschluss an die in Figur 5 dargestellte Situation in Fallrichtung 10 betrieben wurde. Analog zu der mit Hilfe von Figur 4 dargestellten Ausführungsform entsteht hierdurch im oberen Bereich der unteren Rutschfläche 8a Platz für eine weitere Befüllung, da die Schichtstapel der Güter 4 und 4b gesamthaft in Richtung Rutschendstelle 16 transportiert wurden. Eine weitere Befüllung kann ebenfalls analog erfolgen zu dem mit Hilfe der von Figur 3, 4 und 5 dargestellten bevorzugten Ausführungsformen des Verfahren, das in den unabhängigen und abhängigen Ansprüchen genauer beschrieben wird. Der Vergleich von Figur 5 respektive 6 mit Figur 2 zeigt eine vorteilhaftere Befüllung der Transportrutsche 2 auch im unteren Bereich der unteren Rutschfläche 8a. Durch eine weitere Befüllung der Transportrutsche 2 mit dem in den abhängigen und unabhängigen Ansprüchen beschriebenen Verfahren erfolgt auch in der Rutschendstelle 16 und/ oder im unteren Bereich der unteren Rutschfläche 8a eine ebenso vorteilhafte Befüllung der Transportrutsche 2 wie dies nach Stand der Technik nur im oberen Bereich der unteren Rutschfläche 8a möglich ist. Diese Befüllung erhöht somit die Speicherkapazität der Transportrutsche 2 insgesamt, ohne ihren Flächenbedarf zu erhöhen.

Um beispielsweise bei einer langen Rutschfläche 8 eine iterative Durchführung des Verfahrens zum Speichern und/ oder zur erleichterten Entladung von übereinander legbaren Gütern 4 auf einer Transportrutsche 2 zu ermöglichen, kann das Antriebsmittel 14a nach der Ansteuerung des Antriebsmittels 14a in Fallrichtung 10 erneut entgegen der Fallrichtung 10 angetrieben werden. Das erneute Antreiben des Antriebsmittels 14a entgegen der Fallrichtung führt jedoch nur vor einer vollständigen Ausbildung der untersten Schicht unterhalb des Unterbruchs 12 zu einer besseren Befüllung der Transportrutsche 2, andernfalls erhöht es nur den Gegendruck auf die Güter 4 unmittelbar unterhalb des Unterbruchs 12. Eine stattgefundene Ausbildung der untersten Schicht kann beispielsweise mit Hilfe des oben beschriebenen Endstellendetektors 20c geschehen.

Um zu verhindern, dass durch das Antreiben des Antriebsmittels 14a entgegen der Fallrichtung 10 ein zu starker Gegendruck auf die Güter 4 direkt unmittelbar unterhalb des Unterbruchs 12 ausgeübt wird, erfolgt ein Antreiben des Antriebsmittels 14a entgegen der Fallrichtung 10 solange, bis sich Güter 4 stationär unmittelbar unterhalb des Unterbruchs 12 auf der unteren Rutschfläche 8a befinden. Stationär bedeutet hierbei, dass die Güter 4 sich nicht weiter in Fallrichtung 10 bewegen, sondern bei unveränderter Ansteuerung des Antriebsmittels 14a auf ihrer momentanen Position verharren. Dies könnte ein an dieser Stelle installierter Detektor 20, wie beispielsweise der Gegendruckdetektor 20a, detektieren.

Um sicher zu stellen, dass ein Abtransport der Güter 4 weg vom Unterbruch 12 in Fallrichtung 10 erst erfolgt, nachdem der obere Bereich der unteren Rutschfläche 8a vorteilhaft das Volumen ausnutzend mit Schichtstapeln von Gütern 4 befüllt wurde, erfolgt ein erneutes Antreiben des Antriebsmittels 14a in Fallrichtung 10 erst, wenn sich im oberen Bereich der unteren Rutschfläche 8a direkt am Unterbruch 12 zwei oder mehrere Schichten ausgebildet haben. Ob eine Ausbildung von Schichtstapel stattgefunden hat, kann ein an dieser Stelle installierter Detektor 20, wie beispielsweise der Schichtausbildungsdetektor 20b, detektieren.

Damit durch das Antriebsmittel 14a kein zusätzlicher Staudruck auf die Güter 4 in der Rutschendstelle 16 ausgeübt wird, erfolgt ein Antreiben des Antriebsmittels 14a in Fallrichtung 10 nur, solange sich keine Güter 4 stationär in der Rutschendstelle 16 befinden. Stationär bedeutet hierbei, dass die Güter 4 auf ihrer momentanen Position in der Rutschendstelle 16 verharren, also nicht entladen oder durch ein Antreiben des Antriebsmittels 14a entgegen der Fallrichtung 10 in einen Bereich weiter oben auf der Rutschfläche 8 transportiert werden. Man beachte, dass ein generelles Verbot eines Betreibens des Antriebsmittels 14a in Fallrichtung 10 bei Anwesenheit von Gütern 4 in der Rutschendstelle 16 nur sinnvoll ist, wenn sichergestellt ist, dass keine Güter 4 das Antriebsmittel 14a passieren können, solange die unterste Schicht noch nicht komplett ausgebildet ist. Dies sollte jedoch mit der Befüllung nach dem oben beschriebenen Verfahren sicher gestellt sein. Denn bei einem Antreiben des Antriebsmittels 14a entgegen der Fallrichtung 10 zu Beginn des Verfahrens ist eine Anwesenheit von Gütern 4 in der Rutschendstelle 16 gleichbedeutend mit einer kompletten Ausbildung der untersten Schicht, zumindest wenn sich das Antriebsmittels 14a über die gesamte Breite der unteren Rutschfläche 8a erstreckt und somit sämtliche passierende Güter 4 für den Transport erfasst.

Das Antriebsmittel 14a wird in Abhängigkeit von der Detektion der An- bzw. Abwesenheit der Güter 4 an geeigneten Stellen der Transportrutsche 2 angesteuert. Hierbei wird die An- bzw. Abwesenheit der Güter 4 detektiert in der Rutschendstelle 16 und/ oder unmittelbar unterhalb des Unterbruchs 12 auf der unteren Rutschfläche 8a und/ oder in unmittelbarer Nähe des Unterbruchs 12 im Wesentlichen auf Höhe der oberen Rutschfläche 8b. Eine Detektion an diesen Stellen der Transportrutsche 2 erlaubt eine Aussage über ihren Befüllungszustand. Der Befüllungszustand kann zur Ansteuerung des Antriebsmittels 14a herangezogen werden. Die Detektion kann mit Hilfe des mindestens einen Detektors 20 geschehen, der den Endstellendetektors 20c und/ oder den Gegendruckdetektor 20a und/ oder den Schichtausbildungsdetektor 20b umfasst.

Um den Staudruck auf die Güter 4 in der Rutschendstelle 16 nicht zusätzlich zu erhöhen und/ oder aktiv zu reduzieren, erlaubt eine Anwesenheit von Gütern 4 in der Rutschendstelle 16 keine Ansteuerung des Antriebsmittels 14a in Fallrichtung 10 und/oder bewirkt eine Ansteuerung des Antriebsmittels 14a entgegen der Fallrichtung 10. Damit sich eine unterste Schicht von Gütern 4 im oberen Bereich der unteren Rutschfläche 8a dicht gepackt ausbilden kann, bevor sie komplett über die gesamte untere Rutschfläche 8a ausgebildet ist, bewirkt eine Abwesenheit von Gütern 4 unmittelbar unterhalb des Unterbruchs 12 auf der unteren Rutschfläche 8a eine Ansteuerung des Antriebsmittels 14a entgegen der Fallrichtung 10. Solange sich keine Güter 4 stationär am Unterbruch 12 befinden, kann diese Ansteuerung des Antriebsmittels 14a entgegen der Fallrichtung 10 nicht zu einer prinzipiell unerwünschten Erhöhung des Gegendrucks führen. Eine gleichzeitige Anwesenheit von Gütern 4 unmittelbar unterhalb des Unterbruchs 12 auf der unteren Rutschfläche 8a sowie in unmittelbarer Nähe des Unterbruchs 12 im Wesentlichen auf Höhe der oberen Rutschfläche 8b spricht dafür, dass eine Ausbildung von Schichtstapeln unmittelbar unterhalb des Unterbruchs 12 stattgefunden hat und bewirkt eine Ansteuerung des Antriebsmittels 14a in Fallrichtung 10, welche gefolgt sein kann von einem Stillstand und von einer Ansteuerung des Antriebsmittels 14a entgegen der Fallrichtung 10. Dies ermöglicht eine Befüllung des unteren Bereichs der Transportrutsche 2, die genauso vorteilhaft ist wie die im oberen Bereich der unteren Rutschfläche 8a stattgefundene Befüllung. Durch die Ansteuerung des Antriebsmittels 14a in Fallrichtung 10 erfolgt ein Transport der Schichtstapel weg vom Unterbruch 12 in Fallrichtung 10. Ein Stillstand des Antriebsmittels 14a erhöht den Staudruck auf die Güter 4 in der Rutschendstelle 16 nicht zusätzlich. Eine erneute Ansteuerung des Antriebsmittels 14a entgegen der Fallrichtung 10 nach der Ansteuerung in Fallrichtung 10 ermöglicht einerseits eine aktive Reduktion des Staudrucks auf die Güter in der Rutschendstelle 16, sowie andererseits eine iterative Durchführung des Verfahrens zum Speichern und/ oder zur erleichterten Entladung von übereinander legbaren Gütern 4 auf einer Transportrutsche 2.

Um eine automatische Durchführung des Verfahrens zu ermöglichen, wird das Antriebsmittel 14a automatisch angesteuert. Eine automatische Ansteuerung umfasst auch eine Bestimmung der Antriebsrichtung sowie ein Stillstehen auch nach anderen Kriterien als der An- bzw. Abwesenheit von Gütern 4 an geeigneten Stellen der Transportrutsche 2. Dies umfasst eine Ansteuerung nach Zeit und/ oder in Abhängigkeit von der Anzahl und/ oder dem Gewicht der Güter, die die Transportrutsche 2 insgesamt passiert haben.

### Bezugszeichenliste

- 2: Transportrutsche
- 4: Güter
- 4a: Güter in der Rutschendstelle 16 und im unteren Bereich der unteren Rutschfläche 8a bei Befüllung nach Stand der Technik
- 4b: Güter, die den Unterbruch 12 nach und/ oder während des Transports der Güter 4 in Fallrichtung 10 passiert haben
- 6: Rutschabschnitt
- 8: Rutschfläche
- 8a: untere Rutschfläche
- 8b: obere Rutschfläche
- 10: Fallrichtung
- 12: Unterbruch
- 14a: Antriebsmittel
- 16: Rutschendstelle
- 18: Sorter
- 20: Detektor
- 20a: Gegendruckdetektor
- 20b: Schichtausbildungsdetektor
- 20c: Endstellendetektor
- 22: Steuervorrichtung

## Patentansprüche

1. Transportrutsche (2) geeignet zur Verwendung als Speicher von übereinander legbaren Gütern (4), insbesondere von Paketen und Gepäckstücken; umfassend:
a) einen Rutschabschnitt (6), der eine geneigte Rutschfläche (8) aufweist mit einer Fallrichtung (10) entlang der Rutschfläche (8);
b) wobei besagter Rutschabschnitt (6) mittels mindestens eines Unterbruchs (12), beispielsweise einer Stufe, unterbrochen ist, so dass die Rutschfläche (8) in mindestens eine obere Rutschfläche (8b) und eine untere Rutschfläche (8a) unterteilt ist;
c) wobei der besagte Unterbruch (12) ausgestaltet ist unterhalb des Unterbruchs (12) eine Ausbildung von mindestens zwei übereinander liegenden Schichten der Güter (4) zu erleichtern;
d) wobei zumindest die untere Rutschfläche (8a) weiter mindestens ein antreibbares und ansteuerbares Antriebsmittel (14a) zum Transportieren der Güter (4) umfasst, auf welchem die Güter (4) der untersten Schicht für deren Transport zumindest teilweise aufliegen können; und
e) eine Steuervorrichtung (22) zur Steuerung des Antriebsmittels (14a),
**dadurch gekennzeichnet,dass** das Antriebmittel (14a) entgegen der Fallrichtung (10) antreibbar und ansteuerbar ist, und dass die Steuervorrichtung (22) das Antriebsmittel (14a) so steuert, dass anschließend ein passieren lassen der Güter (4) entlang der Rutschfläche (8) in Fallrichtung (10) und ein Befördern der Güter (4) durch das entgegen der Fallrichtung (10) betriebene Antriebsmittel (14a) erfolgt.

2. Transportrutsche (2) nach Anspruch 1, zudem umfassend eine Rutschendstelle (16) unterhalb des Rutschabschnitts (6) an der die Güter (4) entnehmbar sind.

3. Transportrutsche (2) nach einem der Ansprüche 1 bis 2, zudem umfassend mindestens einen Detektor (20) zur berührungslosen Detektion der Güter (4) auf der Transportrutsche (2).

4. Transportrutsche (2) nach einem der Ansprüche 1 bis 3, **gekennzeichnet dadurch, dass**
die Steuervorrichtung (22) adaptiert ist, zu unterscheiden, ob sich ein Gut (4) stationär am Detektor (20) befindet oder diesen Detektor (20) nur gerade passiert.

5. Transportrutsche (2) nach einem der Ansprüche 1 bis 4, **dadurch gekennzeichnet, dass**
der mindestens eine Detektor (20) einen Endstellendetektor (20c), der ausgestaltet ist, Güter (4) in der Rutschendstelle (16) zu detektieren, und/ oder einen Gegendruckdetektor (20a), der ausgestaltet ist, unmittelbar unterhalb des Unterbruchs (12) auf der unteren Rutschfläche (8a) aufliegende Güter (4) zu detektieren, und/ oder einen Schichtausbildungsdetektor (20b), der ausgestaltet ist, in unmittelbarer Nähe des Unterbruchs (12) eine Höhe der ausgebildeten Schichten zu detektieren, umfasst.

6. Transportrutsche (2) nach einem der vorhergehenden Ansprüche, **dadurch gekennzeichnet, dass**
der mindestens eine eingesetzte Detektor (20) und/ oder der Endstellendetektor (20c) und/ oder der Gegendruckdetektor (20a) und/ oder der Schichtausbildungsdetektor (20b) jeweils mindestens eine Lichtschranke umfasst.

7. Transportrutsche (2) nach einem der Ansprüche 1 bis 6, **dadurch gekennzeichnet, dass**
das Antriebsmittel (14a) eine Rollenbahn und/ oder ein Förderband umfasst.

8. Verfahren zum Speichern und/ oder zur erleichterten Entladung von übereinander legbaren Gütern (4) auf einer Transportrutsche (2), welche einen Rutschabschnitt (6) mit einer geneigten Rutschfläche (8), mit einer Fallrichtung (10) entlang der Rutschfläche (8), umfasst und einer Rutschendstelle (16) unterhalb des Rutschabschnitts (6), wobei besagter Rutschabschnitt (6) mittels mindestens eines Unterbruchs (12) unterbrochen ist, so dass die Rutschfläche (8) in mindestens eine obere Rutschfläche (8b) und eine untere Rutschfläche (8a) unterteilt ist und wobei zumindest die untere Rutschfläche (8a) weiter mindestens ein entgegen der Fallrichtung (10) antreibbares und ansteuerbares Antriebsmittel (14a), auf welchem die Güter (4) einer untersten Schicht zumindest teilweise aufliegen können, umfasst, umfassend die folgenden Verfahrensschritte:
a) passieren lassen der Güter (4) entlang der Rutschfläche (8) in Fallrichtung (10);
b) Befördern der Güter (4) durch das entgegen der Fallrichtung (10) betriebene Antriebsmittel (14a).

9. Verfahren gemäß Anspruch 8, zudem umfassend den Verfahrensschritt einer
Ausbildung mindestens einer weiteren auf der untersten Schicht aufliegenden Schicht im oberen Bereich der unteren Rutschfläche (8a) durch passieren lassen weiterer Güter (4) über den Unterbruch entlang der Rutschfläche (8) in Fallrichtung (10).

10. Verfahren gemäß einem der Ansprüche 8 oder 9, **dadurch gekennzeichnet, dass**
im Anschluss an eine Ansteuerung des Antriebsmittels (14a) entgegen der Fallrichtung (10) durch eine Ansteuerung des Antriebsmittels (14a) in Fallrichtung (10), wobei zwischen dem Wechsel das Antriebsmittel (14a) stillstehen kann, bereits mehrere parallel zur Rutschfläche (8) im oberen Teil der unteren Rutschfläche (8a) ausgebildete Schichten von Gütern (4) gesamthaft in Richtung Rutschendstelle (16) transportiert werden.

11. Verfahren gemäß Anspruch 10, **dadurch gekennzeichnet, dass** nach der Ansteuerung des Antriebsmittels (14a) in Fallrichtung (10) das Antriebsmittel (14a) erneut entgegen der Fallrichtung (10) angetrieben wird.

12. Verfahren gemäß einem der Ansprüche 8 bis 11, **dadurch gekennzeichnet, dass**
ein Antreiben des Antriebsmittels (14a) entgegen der Fallrichtung (10) solange erfolgt, bis sich Güter (4) stationär unmittelbar unterhalb des Unterbruchs (12) auf der unteren Rutschfläche (8a) befinden und dass ein erneutes Antreiben des Antriebsmittels (14a) in Fallrichtung (10) erst erfolgt, wenn sich im oberen Bereich der unteren Rutschfläche (8a) direkt am Unterbruch (12) zwei oder mehrere Schichten ausgebildet haben.

13. Verfahren gemäß einem der Ansprüche 8 bis 12, **dadurch gekennzeichnet, dass**
ein Antreiben des Antriebsmittels (14a) in Fallrichtung (10) nur erfolgt, solange sich keine Güter (4) stationär in der Rutschendstelle (16) befinden.

14. Verfahren gemäß einem der Ansprüche 8 bis 13, **dadurch gekennzeichnet, dass**
a. in Abhängigkeit von der Detektion der An- bzw. Abwesenheit der Güter (4) an geeigneten Stellen der Transportrutsche (2) das Antriebsmittel (14a) angesteuert wird,
b. wobei die An- bzw. Abwesenheit der Güter (4) detektiert wird in der Rutschendstelle (16) und/ oder unmittelbar unterhalb des Unterbruchs (12) auf der unteren Rutschfläche (8a) und/ oder in unmittelbarer Nähe des Unterbruchs (12) im Wesentlichen auf Höhe der oberen Rutschfläche (8b).

15. Verfahren gemäß einem der Ansprüche 8 bis 14, **dadurch gekennzeichnet, dass**
a) eine Anwesenheit von Gütern (4) in der Rutschendstelle (16) keine Ansteuerung des Antriebsmittels (14a) in Fallrichtung (10) erlaubt und/oder eine Ansteuerung des Antriebsmittels (14a) entgegen der Fallrichtung (10) bewirkt; und/ oder
b) eine Abwesenheit von Gütern (4) unmittelbar unterhalb des Unterbruchs auf der unteren Rutschfläche (20a) eine Ansteuerung des Antriebsmittels (14a) entgegen der Fallrichtung (10) bewirkt; und/ oder
c) eine gleichzeitige Anwesenheit von Gütern (4) unmittelbar unterhalb des Unterbruchs (12) auf der unteren Rutschfläche (8a) sowie in unmittelbarer Nähe des Unterbruchs (12) im Wesentlichen auf Höhe der oberen Rutschfläche (8b) eine Ansteuerung des Antriebsmittels (14a) in Fallrichtung (10) bewirkt, welche gefolgt sein kann von einem Stillstand und von einer Ansteuerung des Antriebsmittels (14a) entgegen der Fallrichtung (10).

16. Verfahren gemäß einem der Ansprüche 8 bis 15, **dadurch gekennzeichnet, dass**
das Antriebsmittel (14a) automatisch angesteuert wird.

## Claims

1. Transport chute (2) suitable for use as storage facility for goods (4) which can be disposed one above the other, in particular for packages and items of luggage; comprising:
a) a slide section (6) having an inclined sliding surface (8) with a direction of fall (10) along the sliding surface (8);
b) wherein the aforementioned slide section (6) is interrupted by means of at least one interruption (12), for example, a step, such that the sliding surface (8) is divided into at least one upper sliding surface (8b) and one lower sliding surface (8a);
c) wherein the aforementioned interruption (12) is designed to facilitate the formation of at least two layers, disposed one above the other, of goods (4) beneath the interruption (12);
d) wherein at least the lower sliding surface (8a) further comprises at least one drivable and controllable drive means (14a) for transporting the goods (4) on which the goods (4) of the bottom layer can rest at least partially for their transportation, and
e) a control device (22) for controlling the drive means (14a),
**characterised in that** the drive means (14a) can be driven and controlled contrary to the direction of fall (10), and that the control device (22) controls the drive means (14a) such that the goods (4) are then allowed to pass along the sliding surface (8) in the direction of fall (10) and the goods (4) are transported by means of the drive means (14a) contrary to the direction of fall (10).

2. Transport chute (2) according to claim 1, in addition comprising a chute terminal (16) beneath the slide section (6) at which the goods (4) can be removed.

3. Transport chute (2) according to one of claims 1 to 2, in addition comprising
at least one detector (20) for contact-free detection of goods (4) on the transport chute (2).

4. Transport chute (2) according to one of claims 1 to 3, **characterised in that**
the control device (22) is adapted to distinguish whether a goods item (4) is stationary on the detector (20) or just passes this detector (20).

5. Transport chute (2) according to one of claims 1 to 4, **characterised in that**
the at least one detector (20) comprises a terminal detector (20c) which is designed to detect goods (4) in the chute terminal (16), and/or a counter-pressure detector (20a) which is designed to detect goods (4) resting on the lower sliding surface (8a) immediately beneath the interruption (12), and/or a layer formation detector (20b) which is designed to detect a height of the layers formed in the immediate vicinity of the interruption (12).

6. Transport chute (2) according to one of the preceding claims, **characterised in that**
the at least one detector (20) used and/or the terminal detector (20c) and/or the counter-pressure detector (20a) and/or the layer formation detector (20b) each comprises at least one light barrier.

7. Transport chute (2) according to one of claims 1 to 6, **characterised in that**
the drive means (14a) comprises a roller conveyor and/or a conveyor belt.

8. Method for the storage and/or the simplified discharge of goods (4), which can be disposed one above the other, on a transport chute (2) comprising a slide section (6) with an inclined sliding surface (8), with a direction of fall (10) along the sliding surface (8), and a chute terminal (16) beneath the slide section (6), wherein the aforementioned slide section (6) is interrupted by means of at least one interruption (12) such that the sliding surface (8) is divided into at least one upper sliding surface (8b) and one lower sliding surface (8a) and wherein at least the lower sliding surface (8a) further comprises at least one drivable and controllable drive means (14a) contrary to the direction of fall (10) on which the goods (4) of a bottom layer can rest at least partially, comprising the following method steps:
a) letting the goods (4) pass along the sliding surface (8) in the direction of fall (10);
b) transporting the goods (4) by means of the drive means (14a) contrary to the direction of fall (10).

9. Method according to claim 8, in addition comprising the method step of
formation of at least one further layer resting on the bottom layer in the upper region of the lower sliding surface (8a) by allowing further goods (4) to pass over the interruption along the sliding surface (8) in the direction of fall (10).

10. Method according to one of claims 8 or 9, **characterised in that**
following actuation of the drive means (14a) contrary to the direction of fall (10) by actuation of the drive means (14a) in the direction of fall (10), wherein the drive means (14a) can stop between the change, several layers of goods (4) formed parallel to the sliding surface (8) in the upper part of the lower sliding surface (8a) are already transported in the direction of the chute terminal (16) overall.

11. Method according to claim 10, **characterised in that** after the actuation of the drive means (14a) in the direction of fall (10), the drive means (14a) is again driven contrary to the direction of fall (10).

12. Method according to one of claims 8 to 11, **characterised in that**
driving the drive means (14a) contrary to the direction of fall (10) takes place until the goods (4) are stationary immediately beneath the interruption (12) on the lower sliding surface (8a) and a renewed driving of the drive means (14a) in the direction of fall (10) only takes place if two or more layers have formed directly on the interruption (12) in the upper region of the lower sliding surface (8a).

13. Method according to one of claims 8 to 12, **characterised in that**
driving of the drive means (14a) in the direction of fall (10) only takes place as long as no goods (4) are stationary in the chute terminal (16).

14. Method according to one of claims 8 to 13, **characterised in that**
a. depending on the detection of the presence or absence of the goods (4) at appropriate points on the transport chute (2), the drive means (14a) is actuated,
b. wherein the presence or absence of the goods (4) is detected in the chute terminal (16) and/or immediately beneath the interruption (12) on the lower sliding surface (8a) and/or in the immediate vicinity of the interruption (12) essentially at the height of the upper sliding surface (8b).

15. Method according to one of claims 8 to 14, **characterised in that**
a) the presence of goods (4) in the chute terminal (16) does not permit the actuation of the drive means (14a) in the direction of fall (10) and/or produce an actuation of the drive means (14a) contrary to the direction of fall (10); and/or
b) the absence of goods (4) immediately beneath the interruption on the lower sliding surface (20a) produces an actuation of the drive means (14a) contrary to the direction of fall (10); and/or
c) the simultaneous presence of goods (4) immediately beneath the interruption (12) on the lower sliding surface (8a) and in the immediate vicinity of the interruption (12) essentially results in the actuation of the drive means (14a) in the direction of fall (10) at the height of the upper sliding surface (8b), which can be followed by a standstill and by the actuation of the drive means (14a) contrary to the direction of fall (10).

16. Method according to one of claims 8 to 15, **characterised in that**
the drive means (14a) is automatically actuated.

## Revendications

1. Toboggan de transfert (2) destiné à être utilisé comme entrepôt d'objets superposables (4), notamment de colis et de bagages; comportant :
a) un tronçon de glissement (6) présentant une surface de glissement (8) inclinée et ayant un sens de chute (10) le long de la surface de glissement (8) ;
b) ledit tronçon de glissement (6) étant interrompu au moyen d'au moins un élément d'interruption (12), par exemple une marche, de sorte que la surface de glissement (8) est divisée en au moins une surface de glissement supérieure (8b) et une surface de glissement inférieure (8a) ;
c) ledit élément d'interruption (12) étant conçu pour faciliter, au-dessous de l'élément d'interruption (12), la formation d'au moins deux couches d'objets superposées (4) ;
d) au moins la surface de glissement inférieure (8a) comprenant par ailleurs un moyen d'entraînement (14a) entraînable et commandable pour le transfert des objets (4) sur lequel les objets (4) de la couche inférieure peuvent reposer au moins partiellement pour leur transfert ; et
e) un organe de commande (22) pour commander le moyen d'entraînement (14a),
**caractérisé en ce que** le moyen d'entraînement (14a) est entraînable et commandable à l'encontre du sens de chute (10) et **en ce que** l'organe de commande (22) commande le moyen d'entraînement (14a) de sorte que par la suite, les objets (4) puissent avancer le long de la surface de glissement (8) dans le sens de chute (10) et que les objets (4) puissent être transférés (4) grâce au moyen d'entraînement (14a) entraîné à l'encontre du sens de chute (10).

2. Toboggan de transfert (2) selon la revendication 1, comportant par ailleurs une zone d'extrémité de toboggan (16) au-dessous du tronçon de glissement (6) sur lequel les objets (4) peuvent être prélevés.

3. Toboggan de transfert (2) selon l'une des revendications 1 à 2, comportant par ailleurs
au moins un détecteur (20) de détection sans contact des objets (4) sur le toboggan de transfert (2).

4. Toboggan de transfert (2) selon l'une des revendications 1 à 3, **caractérisé en ce que**
l'organe de commande (22) est conçu pour distinguer si un objet (4) reste immobilisé devant le détecteur (20) ou s'il est juste en train de passer le détecteur (20).

5. Toboggan de transfert (2) selon l'une des revendications 1 à 4, **caractérisé en ce que**
l'au moins un détecteur (20) comporte un détecteur de zone d'extrémité (20c) conçu pour détecter des objets (4) se trouvant en zone d'extrémité (16) et/ou un détecteur de contre-pression (20a) conçu pour détecter des objets (4) se trouvant sur la surface de glissement inférieure (8a) directement en-dessous de l'élément d'interruption (12) et/ou un détecteur de formation de couches (20b) conçu pour détecter en proximité immédiate de l'élément d'interruption (12) une hauteur des couches constituées.

6. Toboggan de transfert (2) selon l'une des revendications précédentes, **caractérisé en ce que**
l'au moins un détecteur (20) utilisé et/ou le détecteur de zone d'extrémité (20c) et/ou le détecteur de contre-pression (20a) et/ou le détecteur de formation de couches (20b) comporte au moins une barrière lumineuse chacun.

7. Toboggan de transfert (2) selon l'une des revendications 1 à 6, **caractérisé en ce que**
le moyen d'entraînement (14a) comporte un train de rouleaux et/ou une bande transporteuse.

8. Procédé de stockage et/ou de décharge facilitée d'objets superposables (4) sur un toboggan de transfert (2) comportant un tronçon de glissement (6) à surface de glissement inclinée (8) ayant un sens de chute (10) le long de la surface de glissement (8) et une zone d'extrémité de toboggan (16) au-dessous du tronçon de glissement (6), ledit tronçon de glissement (6) étant interrompu au moyen d'au moins un élément d'interruption (12), de sorte que la surface de glissement (8) est divisée en au moins une surface de glissement supérieure (8b) et une surface de glissement inférieure (8a), au moins la surface de glissement inférieure (8a) comprenant par ailleurs un moyen d'entraînement (14a) entraînable et commandable à l'encontre du sens de chute (10) sur lequel les objets (4) d'une couche inférieure peuvent reposer au moins partiellement, comportant les étapes de procédé suivantes :
a) faire passer les objets (4) le long de la surface de glissement (8) dans le sens de chute (10) ;
b) transfert des objets (4) à l'aide du moyen d'entraînement (14a) commandé à l'encontre du sens de chute (10).

9. Procédé selon la revendication 8, comportant par ailleurs l'étape de la formation d'au moins une couche supplémentaire reposant sur la couche inférieure en partie supérieure de la surface de glissement inférieure (8a) en laissant passer des objets (4) supplémentaires en franchissant l'élément d'interruption le long de la surface de glissement (8) dans le sens de chute (10).

10. Procédé selon l'une des revendications 8 ou 9, **caractérisé en ce que**,
après excitation du moyen d'entraînement (14a) à l'encontre du sens de chute (10) par excitation du moyen d'entraînement (14a) dans le sens de chute (10), le moyen d'entraînement (14a) pouvant être à l'arrêt entre les transitions, une pluralité de couches d'objets (4) constituées parallèlement à la surface de glissement (8) dans la partie supérieure de la surface de glissement inférieure (8a) sont transférées dans leur ensemble en direction de la zone d'extrémité (16) du toboggan.

11. Procédé selon la revendication 10, **caractérisé en ce que**, après l'excitation du moyen d'entraînement (14a) dans le sens de chute (10), le moyen d'entraînement (14a) est commandé de nouveau à l'encontre du sens de chute (10).

12. Procédé selon l'une des revendications 8 à 11, **caractérisé en ce que**
le moyen d'entraînement (14a) est commandé à l'encontre de la direction de chute (10) tant qu'il y a des objets (4) immobilisés directement au-dessous de l'élément d'interruption (12) sur la surface de glissement inférieure (8a) et **en ce que** le moyen d'entraînement (14a) n'est excité de nouveau en direction de chute (10) lorsqu'en partie supérieure de la surface de glissement inférieure (8a), deux ou plusieurs couches se sont constituées directement à l'endroit de l'élément d'interruption (12).

13. Procédé selon l'une des revendications 8 à 12, **caractérisé en ce que**
le moyen d'entraînement (14a) n'est commandé dans le sens de chute (10) tant qu'il n'y a pas d'objets (4) immobilisés en zone d'extrémité (16) du toboggan.

14. Procédé selon l'une des revendications 8 à 13, **caractérisé en ce que**
a. le moyen d'entraînement (14a) est excité en fonction de la détection de la présence ou de l'absence d'objets (4) à des endroits appropriés du toboggan de transfert (2),
b. la présence respectivement l'absence des objets (4) est détectée en zone d'extrémité de glissement (16) et/ou directement au-dessous de l'élément d'interruption (12) sur la surface de glissement inférieure (8a) et/ou à proximité immédiate de l'élément d'interruption (12) sensiblement au niveau de la surface de glissement supérieure (8b).

15. Procédé selon l'une des revendications 8 à 14, **caractérisé en ce que**
a) la présence d'objets (4) en zone d'extrémité du toboggan (16) ne permet pas l'excitation du moyen d'entraînement (14a) dans le sens de chute (10) et/ou provoque l'excitation du moyen d'entraînement (14a) à l'encontre du sens de chute (10); et/ou
b) l'absence d'objets (4) directement au-dessous de l'élément d'interruption sur la surface de glissement inférieure (20a) entraîne l'excitation du moyen d'entraînement (14a) à l'encontre du sens de chute (10); et/ou
c) la présence simultanée d'objets (4) directement au-dessous de l'élément d'interruption (12) sur la surface de glissement inférieure (8a) ainsi qu'à proximité immédiate de l'élément d'interruption (12), sensiblement au niveau de la surface de glissement supérieure (8b), entraine l'excitation du moyen d'entraînement (14a) dans le sens de chute (10), pouvant être suivi par un arrêt et l'excitation du moyen d'entraînement (14a) à l'encontre du sens de chute (10).

16. Procédé selon l'une des revendications 8 à 15, **caractérisé en ce que**
l'excitation du moyen d'entraînement (14a) se fait de manière automatique.
